(19) Europäisches Patentamt
European Patent Office
Office européen des brevets

(11) Publication number: 0 204 158
A2

(12) # EUROPEAN PATENT APPLICATION

(21) Application number: 86106075.4

(22) Date of filing: 02.05.86

(51) Int. Cl.[4]: C 09 J 3/14
C 09 D 3/727, C 08 L 35/00

(30) Priority: 07.05.85 US 731418

(43) Date of publication of application:
10.12.86 Bulletin 86/50

(84) Designated Contracting States:
AT BE CH DE FR GB IT LI LU NL SE

(71) Applicant: W.R. GRACE & CO.
Grace Plaza 1114 Avenue of the Americas
New York New York 10036(US)

(72) Inventor: Shiow, Ching Lin
3525 Angus Valley Trail
Ellicott City, MD 21043(US)

(74) Representative: UEXKÜLL & STOLBERG Patentanwälte
Beselerstrasse 4
D-2000 Hamburg 52(DE)

(54) **Reactive plastisol dispersion.**

(57) This invention relates to a thermosetting plastisol dispersion composition comprising

(1) at least one maleic anhydride copolymer in powder form, which is insoluble in the reactive plasticizer at room temperature and plasticizable at a temperature at or above the fluxing temperature;

(2) a liquid reactive plasticizer member capable of solvating the maleic anhydride copolymer at the fluxing temperature of the group consisting of

(a) at least one epoxide resin having an average of more than one epoxide group;

(b) at least one hydroxy terminated resin having an average of more than one hydroxy group;

(c) at least one amine terminated resin having an average of more than one amine terminated group;

(d) at least one isocyanate terminated resin having an average of more than one isocyanate group;

(e) at least one cyanate terminated resin having an average of more than one cyanate group;

(f) a mixture of reactive plasticizers (a) to (e); and

(3) optionally, an effective amount of a curing agent for plasticizers present in the composition.

The plastisol dispersion after fluxing can form a thermoset sealant, coating or adhesive after the crosslinking reaction.



Croydon Printing Company Ltd.

## BACKGROUND OF THE INVENTION

### 1. Field of the Invention

This invention concerns the utilization of plastisol technology and anhydride chemistry to prepare useful one-package thermoset materials. In general, a thermoset material is composed of two reactive ingredients separated into two package to prevent crosslinking reactions. To use a two-package thermoset, two components are metered and mixed right before application. However, this creates the problems of mixing uniformity, metering accuracy and pot life control and results in difficulties of quality control and economical concern.

### 2. Prior Art

Anhydrides are being used in thermoset industries to cure epoxy resins and to polymerize with polyols and polyamines. The copolymers of styrene and maleic anhydride are especially attractive for thermoset formulation because of their heat resistance. These copolymers, having low molecular weight (low melting temperatures), were mixed with powdered epoxy resins to prepare powder coatings [Sumitomo, JP 82/59,922 (1982)]. The copolymers were also dissolved in solvents with epoxy resins to form thermoset solutions [W. J. Heilman et al, U.S. 4,167,539 (1979)]. The solutions of a copolymer were also used to react with polyhydric alcohols to form crosslinked beads which were foamable and thermally fusible in a mold [M. Kajimura, German Offenlegungsschrift 30 17 350 (1980)]. Furthermore, a polyamine was reacted with the solution of a copolymer, and the product was used as lubricating oil detergent [Sinclair, U.S. 3,432,479 (1969)].

However, with the exception of the powder coating application, the reactions described above are not suitable for the preparation of one-package thermosets.

The low molecular weight copolymer will dissolve in the epoxy resin which results in a viscosity increase on storage. Additionally, the use of a solvent generated problems and inconvenience. The dissolving of polymeric material is a time-consuming process, especially when the polymer has a high molecular weight. Furthermore, the use of a solvent leads to pollution and requires a long drying period. Also, the solvent-based adhesives containing high molecular weight polymer normally have a high viscosity which impedes processability unless the concentration is low. Therefore, the compositions described in the literature are not suitable for reactive plastisols which have to be storage stable dispersions and which can be rapidly plasticized to a homogeneous solid material upon heating at a temperature above the fluxing temperature.

Reactive plastisol compositions of a resin component of a copolymer of a normal alpha-olefin and maleic anhydride and a plasticizer selected from the group consisting of polyols, polyepoxides, polyesters, polyamines, polyisocyanates and polythiols are known in the art. See U.S. 4,068,776, U.S. 4,020,966, U.S. 4,077,935, U.S. 4,093,097, U.S. 4,093,098 and U.S. 4,130,213.

## OBJECTS OF THE INVENTION

One object of the instant invention is to produce a novel process and composition. Another object of the instant invention is to produce a plastisol composition which is useful as an adhesive coating or sealant. Yet another object of the instant invention is to produce a plastisol composition which on curing substantially minimizes or precludes exuding or extraction of the plasticizer. Still another object of the invention is to produce a plastisol composition which on heating to the fluxing temperature acquires handling strength and cures

to a thermoset at or above said fluxing temperature. A further object of the instant invention is to produce a process which comprises heating a reactive plastisol composition to at least its fluxing temperature but below the flow temperature of the thermoplast to flux the plastisol and develop handling strength and, thereafter, obtain a thermoset material by heating above its curing temperature. Other objects will become apparent from a reading hereinafter.

## DESCRIPTION OF THE INVENTION

This invention relates to a thermosetting plastisol dispersion composition comprising

(1) at least one maleic anhydride copolymer in powder form, which is insoluble in the reactive plasticizer at room temperature and plasticizable at a temperature at or above the fluxing temperature;

(2) a liquid reactive plasticizer member capable of solvating the maleic anhydride copolymer at the fluxing temperature of the group consisting of

(a) at least one epoxide resin having an average of more than one epoxide group;

(b) at least one hydroxy terminated resin having an average of more than one hydroxy group;

(c) at least one amine terminated resin having an average of more than one amine terminated group;

(d) at least one isocyanate terminated resin having an avereage of more than one isocyanate group;

(e) at least one cyanate terminated resin having an average of more than one cyanate group;

(f) a mixture of reactive plasticizers (a) to (e); and

(3) optionally, an effective amount of a curing agent for plasticizers present in the composition.

The plastisol dispersion after fluxing can form a thermoset sealant, coating or adhesive after the crosslinking reaction.

The plastisol of the invention operates in the same method as conventional plastisols. That is, herein the term "plastisol" refers to dispersions of finely divided plastic resin particles in a liquid non-volatile plasticizer in which the resin is insoluble and cannot be swollen by the plasticizer at room temperature. However, at elevated temperatures, the resin fluxes, i. e., is substantially completely plasticized by the plasticizer so that a homogeneous, solid solution is obtained which forms a rubbery plastic mass. At this point the plastisol has handling mechanical strength. Further heating at or above the fluxing temperature results in a thermoset material with ultimate structural strength. In addition to the maleic anhydride copolymer resin and the plasticizer, the formulation may also contain latent curing agents such as thermal initiators, accelerators, electrically conductive particles, fillers, pigments, stabilizers and various conventional compound ingredients.

In this invention, a copolymer of styrene and maleic anhydride having a high molecular weight was usually employed for reactive plastisol preparation to demonstrate feasibility. Various kinds of plasticizers, such as liquid epoxy resins, polyols, isocyanate resins, polyamines, polycyanate and a mixture of these resins, were used as reactive plasticizers. The reactions can be summarized as follows:

- 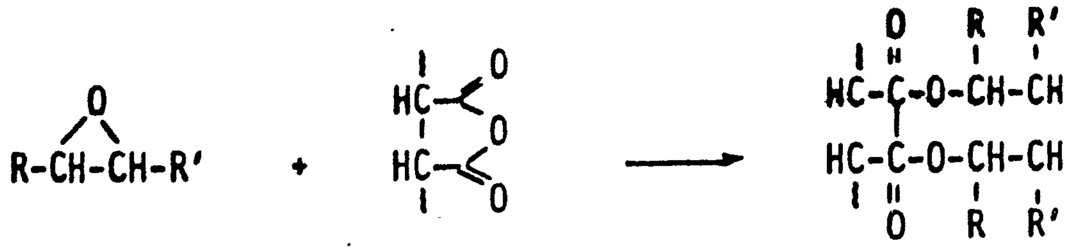

- 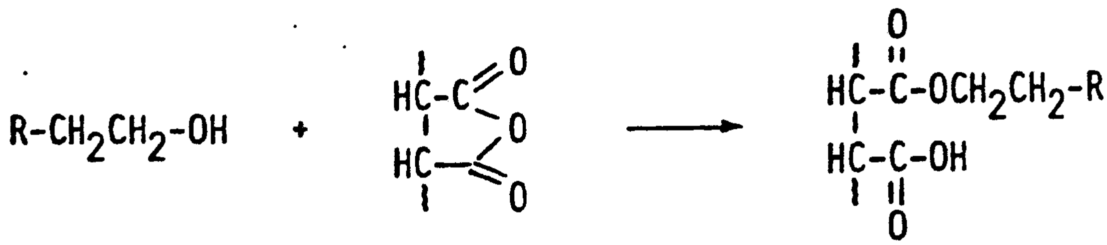

- 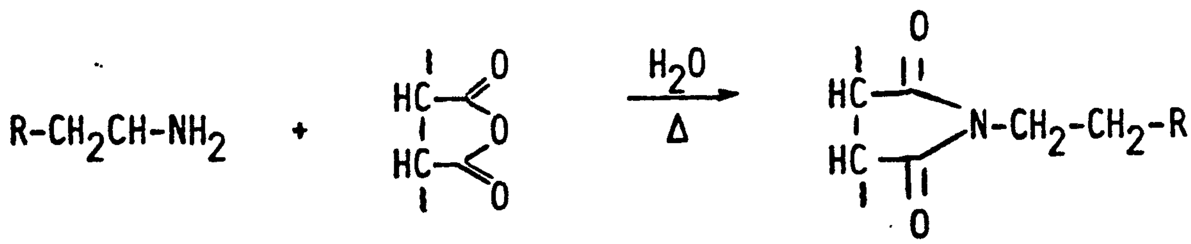
$H_2O$
Δ

- 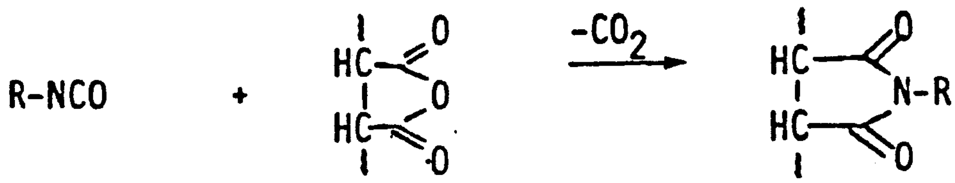
$-CO_2$

- 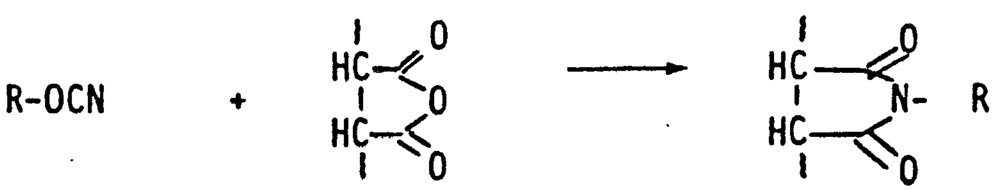

To prepare a plastisol, two basic ingredients, a high molecular weight polymer powder and a liquid plasticizer, are required to form a stable dispersion after blending. Physically, the plasticization process of a plastisol is the permeation of the plasticizer into the polymer particle to solvate the polymer molecules. The permeation rate (P) depends on the diffusion speed of the plasticizer (D) and the interaction between the plasticizer and the polymer (S):

$$P = DxS$$

Under assumption that a polymer is compatible with a certain plasticizer, two important factors, the molecular weight (size) and the structure of polymer and plasticizer, should contribute to the stability of the plastisol which is determined by the diffusibility of the plasticizer upon aging. A stable dispersion should not allow the diffusion to occur at or below storage temperature. To prevent a plasticizer from diffusing, the size of the plasticizer molecules has to be larger than that of the polymer free volume. Upon heating, molecules have to be larger than that of the polymer free volume. Upon heating, the free volume increases with temperature and allows the plasticizer molecules to diffuse into a polymer particle when the temperature is high enough.

Besides the kinetic process of plasticization, the capability of plasticization also depends on thermodynamic parameters. The plasticization should not occur when the free energy of mixing is greater than or equal to zero ($\Delta G_m \geqslant 0$), even if the size of the plasticizer is as ideal as described above.

A "reactive plastisol" is therefore defined as a liquid or paste dispersion of a finely divided polymer powder dispersed in a thermosetting resin or a mixture of

thermosetting resins which would provide the storage stability as well as compatibility in its plasticized state. The reactive plastisol should also be crosslinkable by crosslinking reactions.

In industries such as adhesives, sealants, encapsulations, pottings, composites and others, there is a need to drastically reduce the cycle time in fabrication. For example, the hem flange operation in the automotive industry requires a structural adhesive that turns quickly to a solid to provide handling strength. This adhesive will crosslink to a structural material after curing. The composite industry, especially in a prepreg process, needs to have a process to change the liquid matrix to a "B-stage", which is a dry, moldable, reactive matrix. In the RIM industry today, two package systems have to be used to separate extremely reactive components and to achieve a quick set after mixing. In the electronic industry, potting and encapsulation are required to protect fragile electronic components from a hostile environment. Productivity is the essential requirement in thermosetting industry. In the past, two package systems and chemical kinetic control were two major approaches to achieve certain production goals because of the lack of other alternatives. Herein, a unique technology for resolving many industrial difficulties will be disclosed.

Two of the biggest advantages of plastisol technology are the workability (or processability) and fast phase change from liquid to solid upon heating above fluxing temperature. Because a plastisol is a dispersion, it is obtained simply by low shear mixing. It is a liquid or paste dispersion; so material application is easy. Polymer particles in the plastisols are extremely fine. Therefore, plasticization can take place within seconds

when the temperature is higher than the fluxing point. Taking both advantages in conjunction with thermosetting chemistry, a new, unique technlogy is developed to provide industries with fast gellation thermosetting materials for various applications.

SCHEME 1 summarizes the concept of the reactive plastisol. First, a thermosetting plasticizer, either a mixture or a pure resin, a polymer powder or a polymer powder blend, additives, required curing agents or initiators and fillers are blended in a vacuum mixer to prepare the reactive plastisol. The vacuum is applied to remove the air bubbles trapped in the plastisol during the preparation.

SCHEME 1: Reactive Plastisol Concept

Thermosetting Plasticizers | Polymer Powders | Additives | Latent Curing Agents | Fillers

Blending
(Low shear vacuum mixer)

Reactive Plastisol

Heating
T Clear Point

B-Stage or Handling Strength — Solid Plasticized Polymer

Curing

Structural Strength — Thermoset

The reactive plastisol is fluxed to a rubbery, homogeneous, plasticized polymer upon heating at a temperature higher than the clear point. The temperature

applied can be as high as the curing point when a thermal curing process is used for a direct crosslinking reaction. At this stage, the plasticized plastic should have properties similar to fluxed conventional plastisols. The glass transition and the modulus of plasticized polymer are lower than those of the parent polymer. However, the elongation of the fluxed plastisol is significantly higher than that of the parent polymer. The material is in a solid form to provide certain physical strength (handling strength) and can be used as a B-stage thermosetting matrix. The final cured material turns to a structural thermoset having total crosslinking, semi-interpenetration or interpenetration characteristic depending on the reactivity of the parent polymer.

The plastisol compositions herein are formed by admixture of 100 parts by weight of the maleic anhydride copolymer resin particles with about 5 to 2,000 parts by weight of plasticizer per 100 parts of resin and, when necessary, contain 0.01% to 10% by weight of the plasticizer of a curing agent. Thereafter, the plastisol admixture is heated at a temperature at or above the fluxing temperature which is lower than the melting point of the maleic anhydride copolymer resin for a time sufficient to plasticize the resin by the plasticizer to obtain a homogeneous, solid solution which is a rubbery mass, i. e., a fluxed product. The fluxed product and reactive plastisol are both useful as adhesives or sealants. For example, the solid fluxed material can be placed between two adherends and heated at or above a temperature whereat either the curing agent decomposes and initiates curing of the plasticizer or the plasticizer, per se, initiates polymerization which results in a cured thermoset adhesive. The reactive plastisol dispersion can also be placed between two adherends and heated at or

above the decomposition temperature of the curing agent to flux and initiate the polymerization at the same time.

The curing agents employed for plasticizer (a) the epoxy resin are selected from dicyandiamide, melamine, guanamine, polycarboxylic acid polyhydrazides, carboxylic acid imides, imidazole derivatives and $BF_3$ adducts. The curing agents for the epoxy resin plasticizer are added in amounts ranging from 0.01 to 10% by weight of the epoxy resin plasticizer.

The $BF_3$ adducts used herein as epoxy curing agents include, but are not limited to, $C_6H_5NH_2$ $BF_3$, 2,6-$Et_2C_6H_3NH_2$ $BF_3$, $EtNH_2$ $BF_3$, sec-$Bu_2NH$ $BF_3$, $Et_2NH$ $BF_3$, $(C_6H_5)_3P$ $BF_3$, $C_6H_5NMe_2$ $BF_3$, Pyridine $BF_3$ and $Et_3N$ $BF_3$, $Et_2O$ $BF_3$, $(HOCH_2CH_2)_3N$ $BF_3$ and the like.

Diaryliodonium salts operable herein as curing agents for the epoxy plasticizer are those set out in U. S. 4,238,587, and it is understood that so much of the disclosure therein relative to the diaryliodonium salts is incorporated herein by reference. That is, the diaryliodonium salts which can be utilized in the practice of the invention are shown as follows:

$$[(R)_a(R^1)_bI]^+[Y]^-, \qquad (1)$$

where R is a $C_{(6-13)}$ aromatic hydrocarbon radical, $R^1$ is a divalent aromatic organic radical, and Y is an anion, a is equal to 0 or 2, b is equal to 0 or 1 and the sum of a + b is equal to 1 or 2. Preferably, Y is an $MQ_d$ anion where M is a metal or metalloid, Q is a halogen radical and d is an integer equal to 4-6.

Radicals included within R of formula (1) can be the same or different aromatic carbocyclic radicals having from 6 to 20 carbon atoms, which can be substituted with from 1 to 4 monovalent radicals selected from

$C_{(1-8)}$alkoxy, $C_{(1-8)}$ alkyl, nitro, chloro, etc. R is more particularly phenyl, chlorophenyl, nitrophenyl, methoxyphenyl, pyridyl, etc. Radicals included by $R^1$ of formula (1) are divalent radicals such as

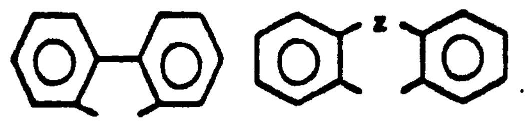

where Z is selected from -O-, -S-,

$$\overset{O}{\overset{\|}{S}},\ \underset{\underset{O}{\|}}{\overset{O}{\overset{\|}{S}}},\ (CH_2)_n,\ \overset{O}{\overset{\|}{C}},\ -\overset{R^2}{N}-,$$

$R^2$ is $C_{(1-8)}$alkyl or $C_{(6-13)}$aryl, and n is an integer equal to 1-8 inclusive.

Metals or metalloids included by M of formula (1) are transition metals such as Sb, Fe, Sn, Bi, Al, Ga, In, Ti, Zr, Sc, V, Cr, Mn, Cs, rare earth elements such as the lanthanides, for example, Cd, Pr, Nd, etc., actinides, such as Th, Pa, U, Np, etc., and metalloids such as B, P, As, Sb, etc. Complex anions included by $MQ_d$ are, for example, $BF_4^-$, $PF_6^-$, $AsF_6^-$, $SbF_6^-$, $FeCl_4^-$, $SnCl_6^-$, $SbCl_6^-$, $BiCl_5^-$, etc.

Some of the diaryliodonium salts which can be used in the practice of the invention are as follows:

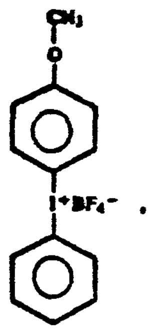
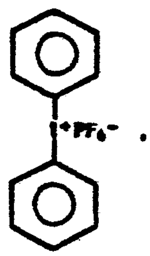
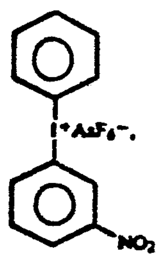
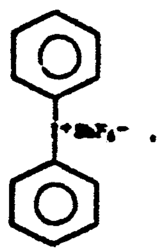
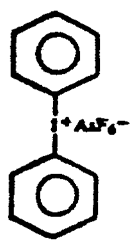
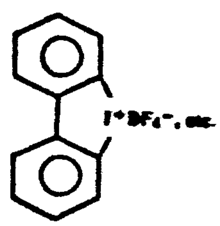

Another onium salt operable herein are the sulfonium salts having an $MF_6$ anion where M is P, As or Sb as disclosed in U. S. 4,417,061 incorporated hereby by reference. Examples of such salts include, but are not limited to:

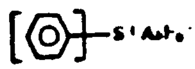

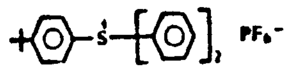

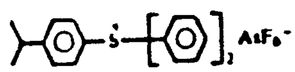

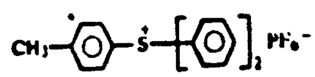

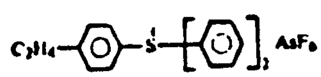

These onium salts are added as curing agents in an amount ranging from 0.01 to 10% by weight of the epoxy resin.

Accelerators for the curing reaction can also be added to the system. Such accelerators are added in amounts ranging from 0.01 to 5% by weight of the plasticizer. Accelerators for the epoxy resin curing agents include, but are not limited to, monuron, chlorotoluron and the like. Accelerators for the polyol and isocyanate plasticizer include tertiary amines such as N,N-dimethyl aniline. For the cyanate plasticizer reaction an accelerator such as tin dioctate is operable.

In practicing the invention, it is sometimes possible to use a curing agent for curing the plasticizer which decomposes at a temperature lower than the fluxing temperature of the plastisol, especially when the composition is quickly heated to the fluxing temperature. This is due to the fact that the fluxing rate is much faster than the curing rate at the fluxing temperature. Thus, one can heat quickly to the fluxing temperature, flux the plastisol and cool down below the decomposition temperature of the curing agent before curing occurs, thereby obtaining a thermoplastic plastisol ready to be cured to a thermoset adhesive on reheating.

The heating step to cure the fluxed solid plastisol is usually carried out for a period of 10 seconds to 30 minutes at a temperature of 80 - 300°C, preferably 100 - 200°C, which is sufficient to fully cure the composition to a solid thermoset adhesive, coating or sealant product.

The heating step to cure the fluxed plastisol resin composition can be accomplished in several ways. In simple systems, the adhesive composition can be applied by manual means to an adherend, contacted with another adherend and the assembled system heated in a forced air oven until a thermoset bond results.

Additionally and preferably, electromagnetic heating can be utilized as a faster and more efficient means of curing, especially where the substrates to be bonded are plastic materials. In addition to the formation of high strength bonds, electromagnetic bonding techniques aid in (a) fast bond setting times, and (b) automated part handling and assembly.

In practicing the instant invention, electromagnetic heating can be employed with the adhesive composition herein to adhere (1) plastic to plastic, (2) plastic to

metal and (3) metal to metal. For example, dielectric heating can be used to bond (1) and (2) supra if the adhesive composition contains sufficient polar groups to heat the composition rapidly and allow it to bond the adherends. Inductive heating can also be used to bond (1), (2) and (3). That is, when at least one of the adherends is an electrically conductive or ferromagnetic metal, the heat generated therein is conveyed by conductance to the adhesive composition thereby initiating the cure to form a thermoset adhesive. In the instance where both adherends are plastic, it is necessary to add an energy absorbing material, i. e., an electrically conductive or ferromagnetic material, preferably in fiber or particle form (10-400 mesh) to the adhesive composition. The energy absorbing material is usually added in amounts ranging from 0.1 to 2 parts by weight, per 1 part by weight of the adhesive plastisol resin composition prior to fluxing. It is also possible to impregnate the plastic adherend at the bonding joint with particles of the energy absorbing material in order to use inductive heating, but care must be exercised that the plastic is not distorted.

The particulate electromagnetic energy absorbing material used in the adhesive composition when induction heating is employed can be one of the magnetizable metals including iron, cobalt and nickel or magnetizable alloys or oxides of nickel and iron and nickel and chromium and iron oxide. These metals and alloys have high Curie points (730°-2,040°F).

Electrically conductive materials operable herein when inductive heating is employed include, but are not limited to, the noble metals, copper, aluminum, nickel, zinc as well as carbon black, graphite and inorganic oxides.

There are two forms of high frequency heating operable herein, the choice of which is determined by the material to be adhered. The major distinction is whether or not the material is a conductor or non-conductor of electrical current. If the material is a conductor, such as iron or steel, then the inductive method is used. If the material is an insulator, such as wood, paper, textiles, synthetic resins, rubber, etc., then dielectric heating can also be employed.

Most naturally occurring and synthetic polymers are non-conductors and, therefore, are suitable for dielectric heating. These polymers may contain a variety of dipoles and ions which orient in an electric field and rotate to maintain their alignment with the field when the field oscillates. The polar groups may be incorporated into the polymer backbone or can be pendant side groups, additives, extenders, pigments, etc. For example, as additives, lossy fillers such as carbon black at a one percent level can be used to increase the dielectric response of the plastisol adhesive. When the polarity of the electric field is reversed millions of times per second, the resulting high frequency of the polar units generates heat within the material.

The uniqueness of dielectric heating is in its uniformity, rapidity, specificity and efficiency. Most plastic heating processes such as conductive, convective or infrared heating are surface-heating processes which need to establish a temperature within the plastic by subsequently transfering the heat to the bulk of the plastic by conduction. Hence, heating of plastics by these methods is a relatively slow process with a non-uniform temperature resulting in overheating of the surfaces. By contrast, dielectric heating generates the heat within the material and is therefore uniform and

rapid, eliminating the need for conductive heat transfer. In the dielectric heating system herein the electrical frequency of the electromagnetic field is in the range 1-3,000 megahertz, said field being generated from a power source of 0.5-1,000 kilowatts.

Induction heating is similar, but not identical, to dielectric heating. The following differences exist: (a) magnetic properties are substituted for dielectric properties; (b) a coil is employed to couple the load rather than electrodes or plates; and (c) induction heaters couple maximum current to the load. The generation of heat by induction operates through the rising and falling of a magnetic field around a conductor with each reversal of an alternating current source. The practical deployment of such field is generally accomplished by proper placement of a conductive coil. When another electrically conductive material is exposed to the field, induced current can be created. These induced currents can be in the form of random or "eddy" currents which result in the generation of heat. Materials which are both magnetizable and conductive generate heat more readily than materials which are only conductive. The heat generated as a result of the magnetic component is the result of hysteresis or work done in rotating magnetizable molecules and as a result of eddy current flow. Polyolefins and other plastics are neither magnetic nor conductive in their natural states. Therefore, they do not, in themselves, create heat as a result of induction.

The use of the eletromagnetic induction heating method for adhesive bonding of plastic structures has proved feasible by interposing selected eletromagnetic energy absorbing materials in an independent adhesive composition layer or gasket conforming to the surfaces to be bonded,

electromagnetic energy passing through the adjacent plastic structures (free of such energy absorbing materials) is readily concentrated and absorbed in the adhesive composition by such energy absorbing materials thereby rapidly initiating cure of the adhesive plastisol composition to a thermoset adhesive.

Electromagnetic energy absorbing materials of various types have been used in the electromagnetic induction heating technique for some time. For instance, inorganic oxides and powdered metals have been incorporated in bond layers and subjected to electromagnetic radiation. In each instance, the type of energy source influences the selection of energy absorbing material. Where the energy absorbing material is comprised of finely divided particles having ferromagnetic properties and such particles are effectively insulated from each other by particle containing nonconducting matrix material, the heating effect is substantially confined to that resulting from the effects of hysteresis. Consequently, heating is limited to the "Curie" temperature of the ferromagnetic material or the temperature at which the magnetic properties of such material cease to exist.

The electromagnetic adhesive composition of this invention may take the form of an extruded ribbon or tape, a molded gasket or cast sheet. In liquid form it may be applied by brush to surfaces to be bonded or may be sprayed on or used as a dip coating for such surfaces.

The foregoing adhesive plastisol composition, when properly utilized as described hereinafter, results in a one component, solvent free bonding system which permits the joining of metal or plastic items without costly surface pretreatment. The electromagnetically induced bonding reaction occurs rapidly and is adaptable to automated fabrication techniques and equipment.

To accomplish the establishment of a concentrated and specifically located heat zone by induction heating for bonding in accordance with the invention, it has been found that the electromagnetic adhesive plastisol compositions described above can be activated and a bond created by an induction heating system operating with an electrical frequency of the electromagnetic field of from about 5 to about 30 megacycles and preferably from about 15 to 30 megacycles, said field being generated from a power source of from about 1 to about 30 kilowatts, and preferably from about 2 to about 5 kilowatts. The electromagnetic field is applied to the articles to be bonded for a period of time of less than about 2 minutes.

As heretofore mentioned, the electromagnetic induction bonding system and improved electromagnetic adhesive compositions of the present invention are applicable to the bonding of metals, thermoplastic and thermoset material, including fiber reinforced thermoset material.

The following examples are set out to explain, but expressly not limit, the instant invention. Unless otherwise noted, all parts and percentages are by weight.

Using liquid epoxy resins as reactive plasticizers, the fluxing temperature varies with the structure of the epoxy plasticizer. TABLE I summarizes the fluxing and onset of curing temperatures of the plastisols prepared from various epoxy resin plasticizers. At elevated temperatures, the fluxed plastisols turned clear and rapidly crosslinked.

## Examples 1-6

30 g of a copolymer of styrene and maleic anhydride having a molecular weight of 50,000 were dispersed in 20 g of various liquid epoxy resins. The thus formed plastisol dispersions were stable longer than 4 months on standing at room temperature. The plastisol dispersions were

characterized by a dielectrometer (Audrey II commercially available from Tetrahedron) to monitor the dielectric loss during heating at a rate of 10°C/min. at fluxing, and onset of the curing temperatures. The results are shown in TABLE I.

Heating of these plastisol dispersions up to 180°C resulted in clear crosslinked thermosets.

TABLE I

**Fluxing and Onset of Curing Temperatures of Epoxy Styrene-Maleic Anhydride Copolymer Plastisols**

| Example | Epoxy Resin | Structure | Fluxing T;°C | Onset Curing T;°C | Storage Stability Rm T. (1 wk.) | Storage Stability 40°C (3 days) |
|---|---|---|---|---|---|---|
| 1 | Ciba's CY-179 | 3,4-Epoxycyclohexylmethyl-3,4-epoxycyclohexane carboxylate | 62 | 62 | S[a] | S |
| 2 | U.Carbide's ERL-4221 | 3,4-Epoxycyclohexylmethyl-3,4-epoxycyclohexane carboxylate | 81 | 81 | S | NS[b] |
| 3 | Ciba's CY-184 | Diglycidyl ester of hexahydrophthalic acid | 70 | 110 | S | NS |
| 4 | U.Carbide's ERL-4243 | 2-(3,4-Epoxycyclohexyl-5,5-spiro-3,4-epoxy) cyclohexane-meta-dioxane | 92 | 92 | S | S |
| 5 | U.Carbide's ERL-4299 | Bis(3,4-epoxycyclohexyl) adipate | 83 | 83 | S | NS |
| 6 | Shell's Epon-828 | Diglycidyl ether of Bis-phenol A | 115 | 165 | S | S |

(a) S = Stable

(b) NS = Not stable

Example 7

The dispersion from Example 5 was applied between 2 fiber reinforced, cured unsaturated polyester substrates (SMC) having a 1 $in^2$ overlapping area. After heating at 160°C for 20 minutes, the adhesive provided substrate failure at the joint.

Example 8

30 g of styrene-maleic anhydride copolymer were dispersed in 20 g of polycaprolactone diol (MW-530 g/mole) to form a pasty plastisol for dielectric measurement; the plastisol showed a fluxing and onset of curing temperature at 70°C. The plastisol, after curing at 170°C for 20 minutes, was flexible. Using this plastisol as an SMC adhesive, it provided a substrate failure to SMC after curing.

Example 9

30 g of styrene-maleic anhydride copolymer were dispersed in 20 g of polypropylene glycol (MW-425 g/mole) to form a stable plastisol. The plastisol had a fluxing temperature at 50°C and became clear and started to cure at 130°C. The material after curing at 170°C for 20 minutes was brittle.

Example 10

30 g of styrene-maleic anhydride copolymer were dispersed in 20 g of polyoxypropylenediamine (Jeffer amine D-400 from Texaco). The pasty dispersion was cured to a yellow opaque material at 170°C for 20 minutes at a pressure of 50 psi.

Example 11

3.0 g of styrene-maleic anhydride copolymer in powder form were dispersed in a mixture containing 3.5 g of dicyanate of bisphenol-A and 3.5 g of Epon-828 (epoxy resin commercially available from Shell). The dispersion was storage stable at room temperature. Upon heating at

120°C for 5 minutes, the dispersion turned to a flexible, light brown solid. After curing at 180°C for an hour, the plasticized solid became a rigid, brown thermoset having good mechanical strength.

Example 12

30 g of styrene-maleic anhydride copolymer were dispersed in 70 g of an isocyanate-terminated polycaprolactone prepared by reacting a mole of polycaprolactone diol (molecular weight = 530 g/mole) with 2 moles of toluene diisocyanate. The dispersion turned to a solid, yellow foam upon heating at 150°C for 30 minutes.

Example 13

30 g of a copolymer of isobutene and maleic anhydride were dispersed in 20 g of CY-176 (see TABLE I) resin. The thus formed plastisol dispersion was stable longer than 4 months on standing at room temperature. Heating of this plastisol dispersion up to 180°C for 30 minutes resulted in a clear, crosslinked thermoset.

I CLAIM:

1. A reactive plastisol dispersion composition comprising

(1) at least one maleic anhydride copolymer in powder form, which is insoluble in the reactive plasticizer at room temperature and plasticizable at a temperature at or above the fluxing temperature;

(2) a liquid reactive plasticizer member capable of solvating the maleic anhydride copolymer at the fluxing temperature of the group consisting of

(a) at least one epoxide resin having an average of more than one epoxide group;

(b) at least one hydroxy terminated resin having an average of more than one hydroxy group;

(c) at least one amine terminated resin having an average of more than one amine terminated group;

(d) at least one isocyanate terminated resin having an avereage of more than one isocyanate group;

(e) at least one cyanate terminated resin having an average of more than one cyanate group;

(f) a mixture of reactive plasticizers (a) to (e); and

(3) optionally, an effective amount of a curing agent for plasticizers present in the composition.

2. The process of forming a solidified homogeneous mass which comprises admixing a reactive plastisol dispersion composition comprising

(1) at least one maleic anhydride copolymer in powder form, which is insoluble in the reactive plasticizer at room temperature and plasticizable at a temperature at or above the fluxing temperature;

(2) a liquid reactive plasticizer member capable of solvating the maleic anhydride copolymer at the fluxing temperature of the group consisting of

(a) at least one epoxide resin having an average of more than one epoxide group;

(b) at least one hydroxy terminated resin having an average of more than one hydroxy group;

(c) at least one amine terminated resin having an average of more than one amine terminated group;

(d) at least one isocyanate terminated resin having an avereage of more than one isocyanate group;

(e) at least one cyanate terminated resin having an average of more than one cyanate group;

(f) a mixture of reactive plasticizers (a) to (e); and

(3) optionally, an effective amount of a curing agent for plasticizers present in the composition;

and, thereafter, heating the admixture for a time sufficient to flux the mass.

3. The process of Claim 2 where in the composition (2) is (a).

4. The process of Claim 2 where in the composition (2) is (b).

5. The process of Claim 2 where in the composition (2) is (c).

6. The process of Claim 2 where in the composition (2) is (d).

7. The process of Claim 2 where in the composition (2) is (e).

8. A composition comprising a reactive, solid, homogeneous, fluxed plastisol formed from

(1) at least one maleic anhydride copolymer in powder form, which is insoluble in the reactive plasticizer at room temperature and plasticizable at a temperature at or above the fluxing temperature;

(2) a liquid reactive plasticizer member capable of solvating the maleic anhydride copolymer at the fluxing temperature of the group consisting of

(a) at least one epoxide resin having an average of more than one epoxide group;

(b) at least one hydroxy terminated resin having an average of more than one hydroxy group;

(c) at least one amine terminated resin having an average of more than one amine terminated group;

(d) at least one isocyanate terminated resin having an avereage of more than one isocyanate group;

(e) at least one cyanate terminated resin having an average of more than one cyanate group;

(f) a mixture of reactive plasticizers (a) to (e); and

(3) optionally, an effective amount of a curing agent for plasticizers present in the composition.

9. The process of adhering two substrates which comprises applying therebetween a reactive plastisol dispersion composition comprising

(1) at least one maleic anhydride copolymer in powder form, which is insoluble in the reactive plasticizer at room temperature and plasticizable at a temperature at or above the fluxing temperature;

(2) a liquid reactive plasticizer member capable of solvating the maleic anhydride copolymer at the fluxing temperature of the group consisting of

(a) at least one epoxide resin having an average of more than one epoxide group;

(b) at least one hydroxy terminated resin having an average of more than one hydroxy group;

(c) at least one amine terminated resin having an average of more than one amine terminated group;

(d) at least one isocyanate terminated resin having an avereage of more than one isocyanate group;

(e) at least one cyanate terminated resin having an average of more than one cyanate group;

(f) a mixture of reactive plasticizers (a) to (e); and

(3) optionally, an effective amount of a curing agent for plasticizers present in the composition;

and, thereafter, heating said composition to a temperature in the range 100-300°C for a time sufficient to cause the adhesive to flux and become thermoset.

10. The process of Claim 9 where in the composition (2) is (a).

11. The process of Claim 9 where in the composition (2) is (b).

12. The process of Claim 9 where in the composition (2) is (c).

13. The process of Claim 9 where in the composition (2) is (d).

14. The process of Claim 9 where in the composition (2) is (e).

15. The composition of Claim 1 as a coating.

16. The composition of Claim 1 as a sealant.

17. The composition of Claim 1 as an adhesive.

18. The composition of Claim 8 as a coating.

19. The composition of Claim 8 as a sealant.

20. The composition of Claim 8 as an adhesive.